# EUROPEAN PATENT APPLICATION

(11) **EP 1 705 087 A1**
(43) Date of publication of application: **27.09.2006**
(21) Application number: 04702830.3
(22) Date of filing: 16.01.2004
(51) Int. Cl.: B60S 3/00

(54) **ROBOT ARM TYPE AUTOMATIC CAR WASHING DEVICE**

(71) Applicant: Takida, Yoshiaki, Nagoya-shi, Aichi 463-0051 (JP)
(72) Inventor: Takida, Yoshiaki, Nagoya-shi, Aichi 463-0051 (JP)
(74) Representative: Vetter, Hans
(86) International application number: PCT/JP2004/000329
(87) International publication number: WO 2005/068270

(57) **Abstract**

A robot arm automatic vehicle washing apparatus automatically cleans a vehicle using a vehicle cleaning rotating brush attached to an end of a robot arm. A vehicle's left side cleaning rotating brush 111 provided to a vehicle's left side cleaning robot arm 110 mainly cleans the left side of the vehicle. A vehicle's right side cleaning rotating brush 121 provided to a vehicle's right side cleaning robot arm 120 mainly cleans the right side of the vehicle. Vehicle image data is created by taking pictures with a camera 150 for taking pictures of the front side of the vehicle, a camera 153 for taking pictures of the left side of the vehicle, a camera 159 for taking pictures of the right side of the vehicle, a camera 155 for taking pictures of the rear side of the vehicle, and a camera 157 for taking pictures of the upper side of the vehicle. The vehicle image data is analyzed by a main control device of the vehicle automatic car washing apparatus to create vehicle actual size data as input data. While the main control device of the vehicle automatic car washing apparatus 102 automatically controls the vehicle cleaning rotating brush provided to the end of the robot arm, the vehicle is cleaned.

## Description

Technical Field

The present invention relates to a robot arm automatic vehicle washing apparatus that automatically washes a vehicle using a rotating brush provided to an end of a robot arm. More specifically, the present invention relates to a robot arm automatic vehicle washing machine, a robot arm automatic vehicle washing apparatus, and a robot arm automatic vehicle washing method, which allow a driver, who drives a vehicle to a robot arm automatic vehicle washing station equipped with the robot arm automatic vehicle washing apparatus, to go through vehicle washing processes including a cleaning process, a rinsing process, and a wiping process, without getting out of the vehicle in a drive-through system.

Background Art

In a conventional vehicle washing method, a driver drives a vehicle to a vehicle washing station, gets out of the vehicle, and then manually performs a cleaning process, a rinsing process, and a wiping process. In a widely used automatic vehicle washing apparatus, a driver stops a vehicle at a specified position, gets out of the vehicle, and operates an operation panel. While the automatic vehicle washing apparatus that covers the entire periphery of the vehicle moves in a longitudinal direction of the vehicle, the cleaning and rinsing processes are performed using a large rotating brush that is high enough for the height of the vehicle and wide enough for the width of the vehicle, and the wiping process is performed with compressed air.

Disclosure of Invention

In view of the foregoing, it is an object of the present invention to provide a robot arm automatic vehicle washing apparatus that automatically performs a vehicle washing process using a cleaning brush provided to an end of a robot arm. In the robot arm automatic vehicle washing apparatus, vehicle image data is created by taking pictures of a stopping vehicle with cameras located at the front, left, right, rear, upper sides of a vehicle stop position. Right before the cleaning process is started, the vehicle image data is analyzed to quantify the actual size of the vehicle. Based on the vehicle's actual size data, the entire surface of the vehicle is automatically cleaned with a vehicle cleaning rotating brush provided to the end of a robot arm using cleaning solution. A plurality of cleaning solution spray nozzles are disposed on the entire floor of the specified vehicle cleaning position where the vehicle stops so as to eject pressurized cleaning solution to the bottom surface of the vehicle. While cleaning solution is delivered from the vehicle cleaning rotating brush provided to the end of the robot arm and the cleaning solution delivering nozzle, the entire surface of the vehicle is cleaned. Simultaneously, the bottom surface of the vehicle is cleaned using pressurized cleaning solution that is ejected from the cleaning solution spray nozzles. A tire and a wheel are cleaned with a tire cleaning rotating brush provided to a tire stop position. After the vehicle cleaning process, the rinsing process is performed by a rinsing shower curtain device. Finally, the wiping process is performed by an air jet wiping device that sprays pressurized air to the vehicle. Each of the processes from the starting of the vehicle cleaning process to the completion of the wiping process can be performed in a drive-through system allowing a vehicle driver not to get out of the vehicle.

Brief Description of the Drawings

Fig. 1 is a schematic diagram showing a robot arm automatic vehicle washing apparatus that automatically cleans a vehicle with a vehicle cleaning rotating brush provided to an end of a robot arm.

Fig. 2 is a schematic diagram showing a robot arm automatic vehicle washing method, in which, when the vehicle arrives at the robot arm automatic washing station, the washing method is selected, the vehicle cleaning process is performed by the robot arm automatic vehicle washing apparatus shown in Fig. 1, and a driver just drives the vehicle to a specified position so that the vehicle rinsing process and the vehicle wiping process are automatically performed.

Fig. 3 is a flow chart showing the processes from the arrival of the vehicle to be washed at a robot arm automatic vehicle washing station to the end of a vehicle washing.

Fig. 4(a) is a schematic diagram showing the robot arm and the vehicle cleaning rotating brush of the robot arm automatic vehicle washing apparatus, and Fig. 4(b) is a schematic diagram showing the cleaning process of the tires and the wheels of the vehicle.

Fig. 5(a) is a schematic diagram showing the cleaning and rinsing processes of the bottom surface of the vehicle, and Fig. 5(b) is a schematic diagram showing the rinsing process of the tires and the wheels of the vehicle that has been cleaned by a method shown in Fig. 4(b).

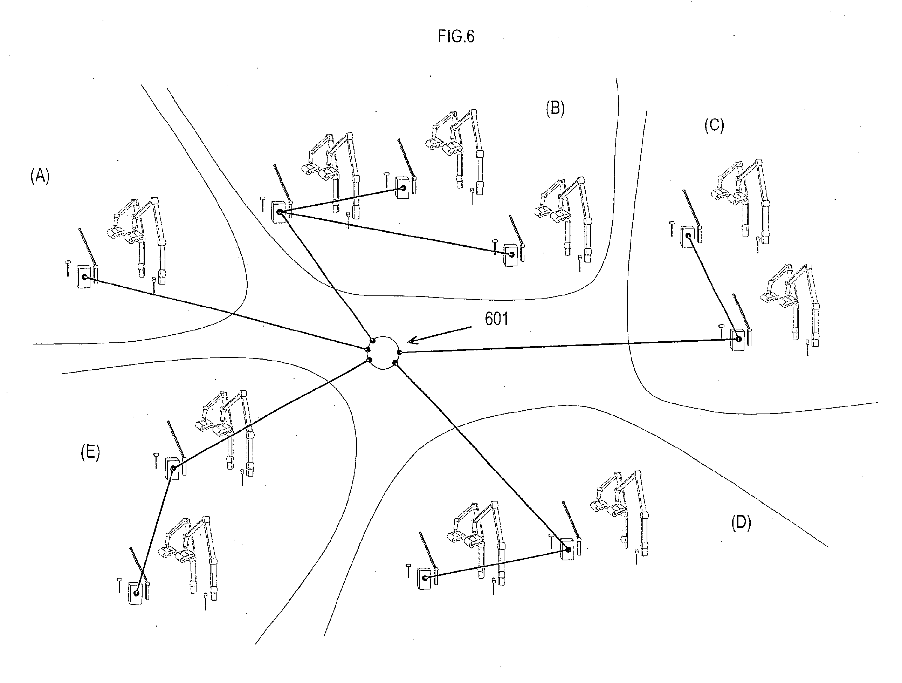

Fig. 6 is a schematic diagram showing a robot arm automatic vehicle washing station centralized management system that can remotely perform operational management such as fault management and functional testing by connecting a main control device of the automatic vehicle washing apparatus, which is installed in each robot arm automatic vehicle washing station located in the urban area or the suburb and has a function to control the entire robot arm automatic vehicle washing station, including a vehicle washing method selecting and fee payment device, the robot-arm automatic vehicle cleaning device, a rinsing shower curtain device, and an air jet wiping device or the like, to a robot arm automatic vehicle washing station maintenance center via a communication line.

Best Mode for Carrying Out the Invention

A robot arm automatic vehicle washing apparatus of an embodiment according to the present invention includes a vehicle washing method selecting and fee payment device, a robot arm automatic vehicle cleaning device, a rinsing shower curtain device, and an air jet wiping device.

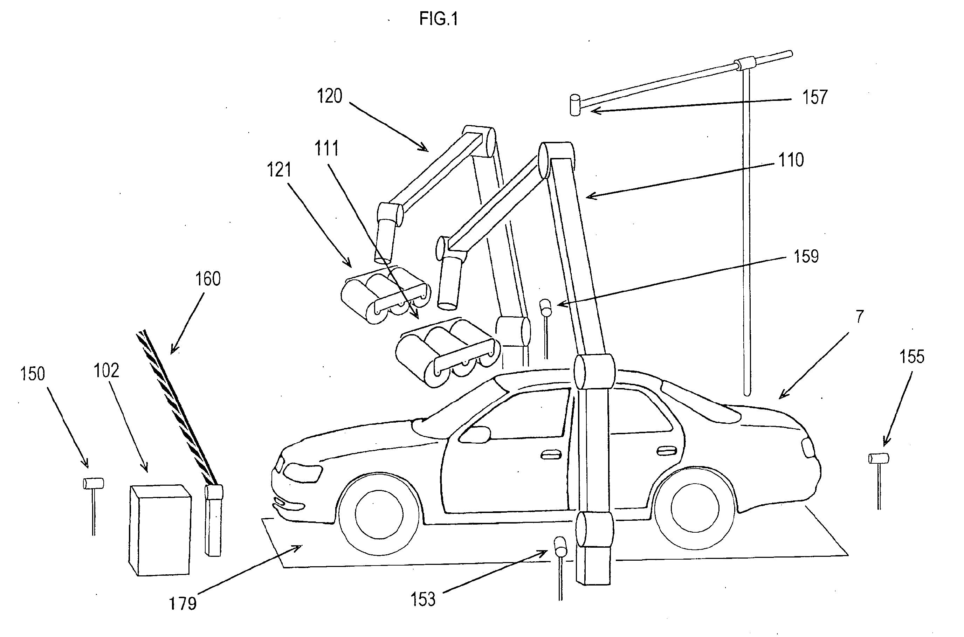

As shown in Fig. 1, a robot arm automatic vehicle washing apparatus that automatically washes a vehicle using a rotating brush provided to an end of a robot arm includes: a vehicle 7 that stops at a specified vehicle stop position 179 for cleaning, a main control device of the automatic vehicle washing apparatus 102, a vehicle's left side cleaning robot arm 110, a vehicle's left side cleaning rotating brush 111, a vehicle's right side cleaning rotating brush 121, a camera for taking pictures of the front side of the vehicle 150, a camera for taking pictures of the left side of the vehicle 153, a camera for taking pictures of the right side of the vehicle 159, a camera for taking pictures of the rear side of the vehicle 155, a camera for taking pictures of the upper side of the vehicle 157, and a vehicle stop 160.

Right after the vehicle 7 stops within the vehicle stop position 179 for cleaning, pictures of the vehicle 7 are taken by five cameras located at the front, left, right, rear, and upper sides. If a luggage carrier, an accommodation box, or a spare tire is attached to the outside of the vehicle 7, pictures of each side of the vehicle 7 are taken with the luggage carrier, the accommodation box, or the spare tire attached so as to create vehicle image data. The vehicle image data is analyzed as three dimensional data using the silhouette method by the main control device of the automatic vehicle washing apparatus 102. The vehicle image data, including a position of a tire, is quantified as vehicle actual size data.

The state of the outside of the vehicle 7 is analyzed based on the vehicle image data to determine whether a window or a sun roof provided to a roof is open. When it is determined that the window or the sun roof is open, it is informed by voice through a speaker provided to the vehicle washing station that the window should be closed and it is confirmed that the vehicle is in a state in which the cleaning process may be performed.

When it is determined that the cleaning process can be started, after confirming that the actual size of the vehicle is measured, that the window of a door of the vehicle 7 is closed and the vehicle is in a state in which the cleaning process can be performed, and that there is no person standing around the vehicle 7 by analyzing the vehicle image data that is created by taking pictures of each side of the vehicle, or by checking whether or not an alarm of a person detection sensor provided to the periphery of the vehicle is sounded, the cleaning process is started.

The cleaning process of the entire surface of the vehicle is automatically performed with the vehicle cleaning rotating brush, provided to the vehicle cleaning robot arm, based on the measured vehicle actual size data. The robot arm maintains a predetermined distance between the vehicle washing rotating brush and the surface of the vehicle.

The cleaning method, whether detergent is used as cleaning solution, whether cleaning time is increased or decreased, whether pressure of the cleaning rotating brush is increased or decreased, or whether rotating speed of the cleaning rotating brush is increased or decreased, is selected by a driver at the entrance of the robot arm automatic vehicle washing station.

The left side of the vehicle is mainly cleaned by the left side vehicle cleaning rotating brush 111 provided to the end of the left side vehicle washing robot arm 110. The right side of the vehicle 7 is mainly cleaned by the right side vehicle cleaning rotating brush 121 provided to the end of the left side vehicle washing robot arm 120.

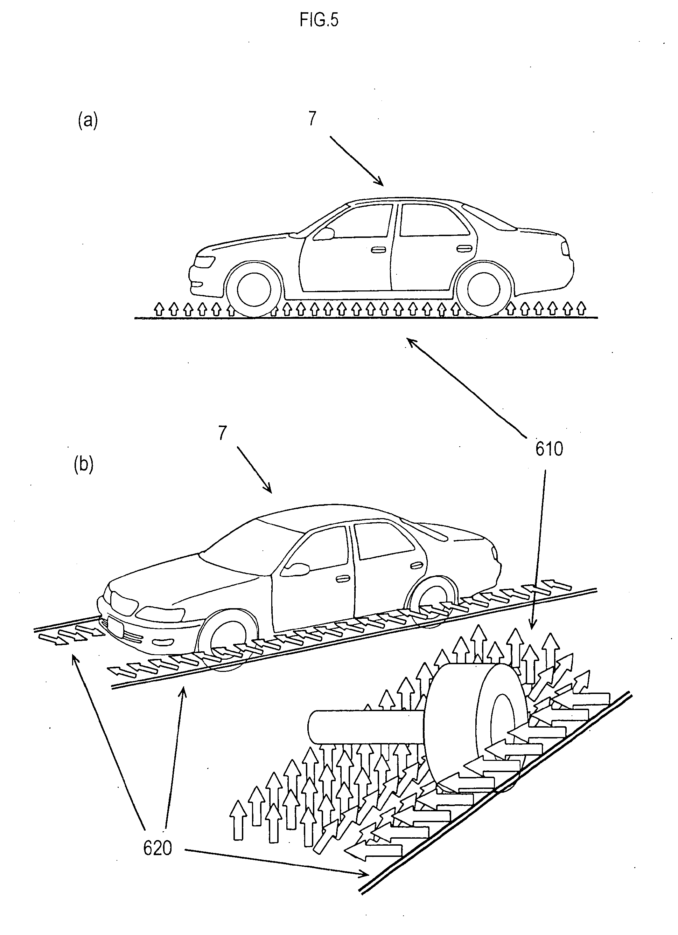

Since the space between the specified vehicle stop position 179 for cleaning and the bottom of the vehicle is small and the bottom of the vehicle is irregular, the vehicle cleaning rotating brush, provided to the vehicle cleaning robot arm, is inadequate for cleaning the bottom of the vehicle, and the peripheries of the suspension and the brake. Therefore, as shown in Fig. 5(a), it is preferable that the bottom of the vehicle is cleaned using cleaning solution ejected from a plurality of cleaning solution spray nozzles 610. The plurality of cleaning solution spray nozzles 610 are provided to the entire area of the specified vehicle stop position 179 for cleaning.

When scratch/dust such as metal powder is attached to the periphery of the brake and to a brake disc, braking capability is decreased. Therefore, the peripheries of the tire and the wheel should always be cleaned.

Conventionally, when cleaning is manually performed, the outside of the tire and the wheel is barely cleaned using cleaning solution ejected from the spray nozzles. In a case in which the wheel is a spoke-type wheel, the periphery of the brake disc is barely cleaned from the space of the wheel. However, it is substantially difficult to clean the peripheries of the suspension and the brake disc that are located inside of the tire and the wheel.

According to the present invention, greasy dirt attached to the bottom of the vehicle can be cleaned. Also, even if scratch/dust such as metallic powder is attached to a portion, where the moving parts are intricately connected to each other around the suspension, and at the peripheries of the brake and brake disc, the scratch/dust can be cleaned. Thus, the moving parts are unlikely to be damaged. The moving functional ability can be maintained. This will lead to the increase in safety. By washing away snow melting agent or salt that are attached to the bottom of the vehicle, after running on snowy roads in the winter, going to the sea for pleasure, or the like, the occurrence of rust on the bottom of the vehicle is prevented.

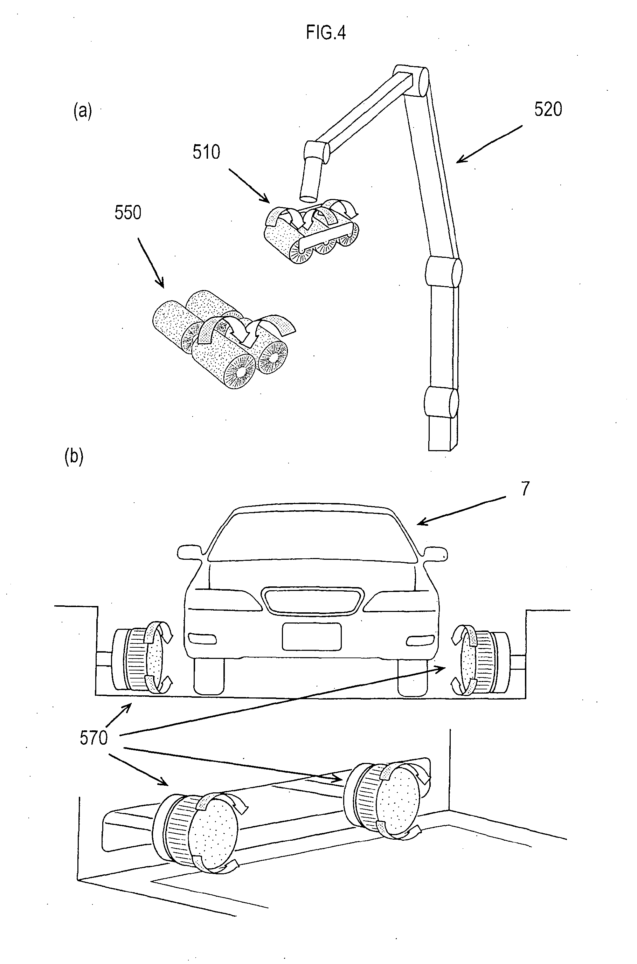

Fig. 4(a) shows the vehicle cleaning rotating brush 510 provided to the end of the vehicle cleaning robot arm 520. The elements of the vehicle cleaning rotating brush 510 are alternately rotated in opposing directions. Even if the vehicle cleaning robot arm 520 moves in either right or left direction, the vehicle cleaning rotating brush 510 can respond to the concavity and convexity of the surface of the vehicle.

Operation of the vehicle cleaning robot arm 520 is controlled by the main control device of the automatic vehicle cleaning apparatus 102. By using a switch, which is provided to a vehicle washing method selecting and fee payment device 201 for selecting the cleaning method of the operation panel at the entrance of the robot arm automatic vehicle washing station, the cleaning process is performed to the entire surface of the vehicle in accordance with the cleaning method selected by the driver.

The cleaning process is performed based on actual size data of the vehicle, which is quantified by a vehicle actual size measuring device, while maintaining a specified distance between the surface of the vehicle and the vehicle cleaning rotating brush 510.

The vehicle cleaning robot arm 520 is provided with a cleaning solution delivering hose (not-shown) for delivering cleaning solution to the vehicle cleaning rotating brush 510. Since the rotational speed of the vehicle cleaning rotating brush 510 is not so fast, it may not be necessary to have a protecting cover for preventing spatters of cleaning solution. However, for example, after the cleaning process of a single vehicle is finished and before the cleaning process of a next vehicle is started, the cleaning process of the vehicle cleaning rotating brush 510 is performed at fast rotational speed. Therefore, the protecting cover for preventing spatters of cleaning solution may be provided.

It is preferable that the vehicle cleaning rotating brush 510 is cleaned. Therefore, in addition to the vehicle cleaning rotating brush 510, a comb shaped cleaning device of the vehicle cleaning rotating brush may be provided to the vehicle cleaning robot arm 520. Thus, when the vehicle cleaning rotating brush 510 rotates, the vehicle cleaning rotating brush 510 is cleaned.

The cleaning device of the vehicle cleaning rotating brush includes a plurality of combs that are long enough to reach near the rotating shaft of the vehicle cleaning rotating brush 510 with the cleaning device of the vehicle cleaning rotating brush attached. The cleaning device of the vehicle cleaning rotating brush has the same width as the width of the vehicle cleaning rotating brush 510.

An example of a vehicle cleaning rotating brush 550, having a different shape from that of the vehicle cleaning rotating brush 510, is illustrated in Fig. 4(a). Each of the rotating brushes is provided with a support in the middle of the rotating shaft, and with the rotating brushes on both ends. The both ends of the rotating brush are made of elastic member instead of hard material such as metal. In the vehicle cleaning rotating brush 550, two of the same rotating brushes are aligned, and each of the two rotating brushes is rotated in an opposing direction. Since no clamp is used at both ends of the rotating brush, the entire periphery of the vehicle cleaning rotating brush 550 is made of a soft material. Even if the robot arm operates falsely to hit against the vehicle or the like, the vehicle cleaning rotating brush 550 is unlikely to scratch the vehicle.

Fig. 4(b) shows a tire cleaning rotating brush 570 that cleans a tire, and a state of installation. Since the vehicle cleaning rotating brush 510 described in the cleaning process of the vehicle is inadequate for cleaning the tire, the tire cleaning rotating brush 570 specifically for the tire is used.

The actual stop position of the vehicle 7 in the vehicle stop position 179 for cleaning is detected. The actual stop position is calculated based on the actual size data of the vehicle measured by the vehicle actual size measuring device. Each of the tire cleaning rotating brushes 570 moves to each of tire positions. A rotating shaft of the vehicle cleaning rotating brush 570 extends. The vehicle cleaning rotating brush 570 moderately presses the tire and the wheel. While cleaning solution is ejected, the tire cleaning rotating brush 570 rotates in both directions.

As in the case in which the surface of the vehicle is cleaned using the vehicle cleaning rotating brush 570, while cleaning solution is delivered to the tire cleaning rotating brush 570, the tire and the wheel are cleaned.

A tire automatic cleaning device may provide a tire cleaning method in which the tire cleaning rotating brush 570 upwardly moves on each side of the vehicle stop position 179 for cleaning, in which the vehicle 7 stops. The tire automatic cleaning device may also provide a tire and wheel cleaning method and a tire and wheel cleaning system in which after each of the tire cleaning rotating brushes 570 moves from a wall surface on each side of the vehicle stop position 179 for cleaning to each of the tire positions, the rotating shaft of the tire cleaning rotating brush 570 extends so as to clean the tire, as shown in Fig. 4(b).

It is necessary that both the vehicle cleaning rotating brush 510 and the tire cleaning rotating brush 570 should be durable. The vehicle cleaning rotating brush 510 and the tire cleaning rotating brush 570 are formed so that particulate substance, such as mud and sand, which causes a scratch to the coating surface of the vehicle, does not remain in spaces between brush-fillings as well as on each of the brush-fillings.

The cleaning solution used to clean the vehicle 7, the tire, and the wheel, dissolves and cleans dirt attached to the vehicle 7, the tire, and the wheel. Soap of the cleaning solution functions as cushion so that the surface of the vehicle 7 or the wheel is unlikely to be scratched. Greasy dirt attached to the brush-filling can also be cleaned. Therefore, it is preferable that detergent should be used as a cleaning solution, at least when the vehicle cleaning rotating brush is cleaned.

The particulate substance such as mud and sand remained between the brush-fillings can not be removed by detergent. Therefore, it is necessary that the vehicle cleaning rotating brush 510 and the tire cleaning rotating brush 570 are formed so that the brush is not clogged with mud and sand.

Every time the cleaning process of a single vehicle is finished, the vehicle cleaning rotating brush 510 and the tire cleaning rotating brush 570 may be cleaned in accordance with material and configuration of the vehicle cleaning rotating brush 510 and the tire cleaning rotating brush 570, and performance of cleaning solution.

In order to clean and rinse the underbody of the vehicle 7 such as the suspension and the brake, compressed cleaning solution or compressed rinsing solution is ejected through a plurality of spray nozzles or spray nozzle fittings. The plurality of spray nozzles are attached to the delivery pipes of the cleaning solution or the rinsing solution, and provided at the same height as the tire positions and on both sides of the specified vehicle stop position 179 for cleaning, where the vehicle 7 stops, and to positions several dozen centimeters away from the tire passing position. The spray nozzle fittings are attached to the ends of the delivery pipes or the delivery hoses of the cleaning solution and the rinsing solution. Due to impact of cleaning solution and rinsing solution and detergency by which dirt is dissolved, cleaning operation is performed.

A vehicle underbody automatic cleaning device 620 is suitable to perform the rinsing of the tire, the wheel, and the periphery of the brake in addition to the cleaning of the wheel and the periphery of the brake from outside of the vehicle.

Fig. 5(b) shows an operating state of the vehicle underbody automatic cleaning device 620. The spray nozzles of cleaning solution and rinsing solution are aligned at the height of the tires on both sides of the vehicle in the specified stop position where the vehicle stops.

While the shower curtain device 230 performs the automatic rinsing process to the vehicle 7, the vehicle underbody automatic cleaning device 620 collectively performs the rinsing process from the outside of the vehicle underbody. Before the vehicle 7 reaches the vehicle stop position for cleaning or the vehicle stop position 179 for rinsing and stops completely, the vehicle underbody automatic cleaning device 620 instantaneously detects the vehicle 7 so as to start the rinsing process. While the rinsing shower curtain device 230 performs the rinsing process, and the vehicle 7 starts moving from the vehicle stop position 230 for rinsing 230 after the end of the rinsing process by the rinsing shower curtain device 230 to leave the rinsing shower curtain device 230, the vehicle underbody automatic cleaning device 620 performs the rinsing process of the underbody of the vehicle 7.

Since the rinsing process is performed when the tire and the wheel rotates at slow speed as well as when the vehicle 7 stops at the specified stop position, the rinsing process can be performed to the entire periphery of the vehicle including a portion that is blocked by spokes on the wheel and is not sufficiently rinsed when the vehicle 7 stops.

As shown in Fig. 5(b), the vehicle underbody automatic cleaning device 620 is configured so that the spray nozzles of cleaning solution or rinsing solution are aligned along both sides of the vehicle and at the height of the tire. Alternatively, the stop position of the tire when the vehicle 7 stops may be detected (not shown) using a camera, or calculated based on the actual size data of the vehicle. Cleaning and rinsing solution may be ejected from the spray nozzle intensively to the tire, the wheel, and the periphery of the disc brake via the wheel.

Several hoses or pipes to deliver cleaning or rinsing solution, to respective ends of which the spray nozzle fittings are attached, are tied into a bundle. Cleaning and rinsing solution is ejected from the spray nozzles intensively to the tire, the wheel, and the periphery of the brake.

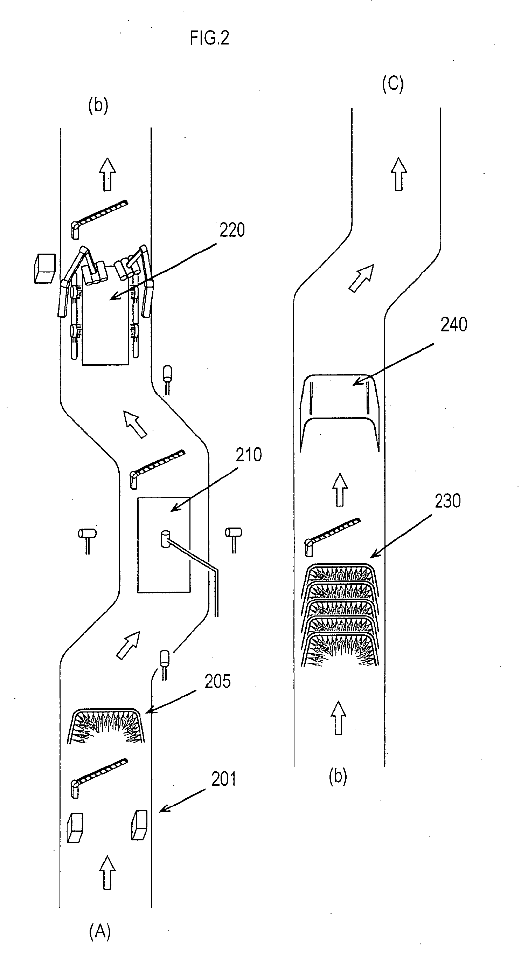

Fig. 2 shows the entire view of the robot arm automatic vehicle washing station provided with the robot arm automatic vehicle washing apparatus.

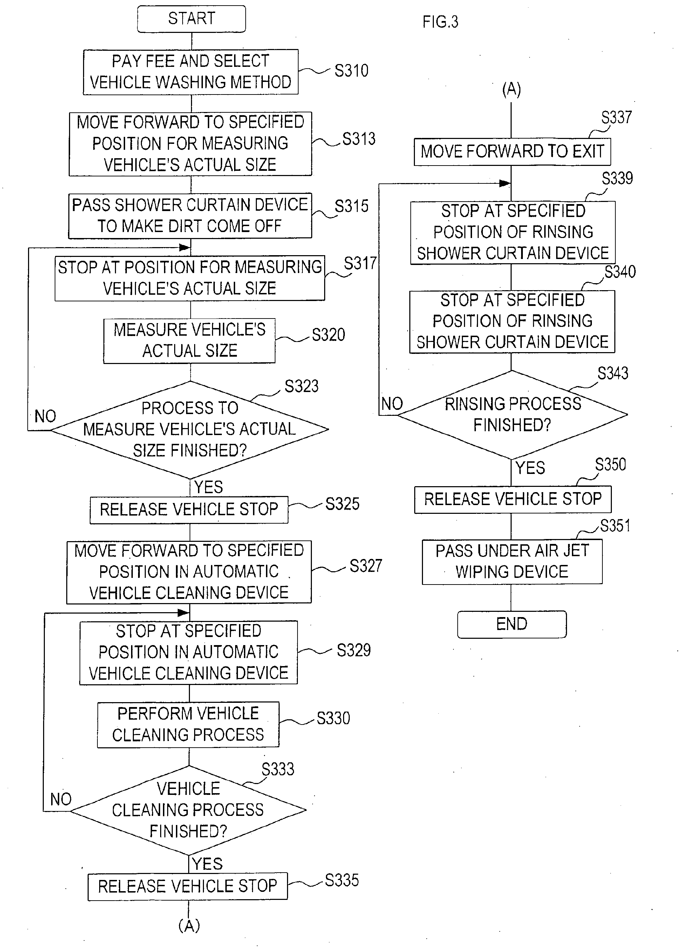

Fig. 3 is a flow chart showing processes in the robot arm automatic vehicle washing station.

The vehicle washing method performed by the robot arm automatic vehicle washing device will be described with reference to Fig. 2 and the flow chart in Fig. 3.

A driver of the vehicle 7 arrives at an entrance "A" of the robot arm automatic vehicle washing station. After determining based on dirt levels of the vehicle 7 whether or not detergent should be used and how long cleaning time should be, the driver selects a washing method from the previously set washing methods using the vehicle washing method selecting and fee payment device 201 disposed at the entrance. In S310, the driver pays a specified car-washing fee.

After the car-washing method is selected and the fee is paid, the vehicle stop of the vehicle washing method selecting and fee payment device 201 is released. In S313, the vehicle 7 moves forward to a specified vehicle stop position so that the actual size of the vehicle as an actual configuration at that time is measured by the vehicle's actual size measuring device 210.

In S315, the vehicle 7 passes the shower curtain device 205 so that dirt on the surface of the vehicle 7 comes off and paintwork of the vehicle is not scratched. If the cleaning process is performed in a state in which the vehicle is dried, the paintwork of the vehicle may be easily scratched.

In S317, the vehicle 7 stops at the specified vehicle stop position of the vehicle's actual size measuring device 210. The vehicle 7 is photographed by a camera 150 for taking pictures of the front side of the vehicle, a camera 153 for taking pictures of the left side of the vehicle, a camera 159 for taking pictures of the right side of the vehicle, a camera 155 for taking pictures of the rear surface of the vehicle, or a camera 157 for taking pictures of the upper surface of the vehicle.

In S320, image data of the front side of the vehicle, image data of the left side of the vehicle, image data of the right surface of the vehicle, image data of the rear surface of the vehicle, and image data of the upper surface of the vehicle are analyzed by the main control device of the automatic vehicle washing apparatus 102 so as to measure the actual size of the vehicle. In S323, when the process to measure the actual size of the vehicle is finished; in S325, the vehicle stop of the vehicle's actual size measuring device 210 is released. In S327, the vehicle 7 moves forward to the robot arm automatic vehicle cleaning device 220. In S329, the vehicle 7 stops at the specified stop position in the robot arm automatic vehicle cleaning device 220.

In S330, the robot arm automatic vehicle cleaning device 220 is automatically controlled by the main control device of the automatic vehicle washing apparatus 102. The vehicle cleaning process is performed based on the measured vehicle actual size data using the vehicle's left side cleaning rotating brush 111 provided to the vehicle's left side washing robot arm 110, and the vehicle's right side cleaning rotating brush 121 provided to the vehicle's right side washing robot arm 120.

Although not shown, when the vehicle cleaning operation is performed, explanation or warning to stop the engine is displayed on a display panel that is placed ahead of the vehicle stop position. Audio explanation or warning, in which the vehicle's occupant should not get out of the vehicle 7 during the cleaning process, is given through a speaker. It is preferable that audio explanation or warning to lock the door of the vehicle 7 is given through a speaker at the vehicle washing method selection and payment device 201 when the vehicle 7 arrives at the entrance "A" of the robot arm automatic vehicle washing station.

Each of the vehicle's left side cleaning rotating brush 111 and the vehicle's right side cleaning rotating brush 121 includes several rotating brushes. As shown in Fig. 4(a), the several rotating brushes are roll-shaped, aligned, and alternately rotated in opposing directions. Consequently, even when the vehicle cleaning robot arm 520 moves in either left or right direction and the vehicle cleaning rotating brush 510 passes concavity and convexity on the surface of the vehicle 7, the cleaning process can be effectively achieved.

The vehicle cleaning rotating brush 510 may move in a horizontal or vertical direction. In some cases, the vehicle cleaning rotating brush 510 may move in a diagonal direction. For example, when the wide surface such as the lateral surface of the vehicle is cleaned, the vehicle may be cleaned from the left end to the right end in a horizontal direction. Then, the vehicle 7 may be cleaned from the right end to the left end in a diagonal direction.

In S330, even when a luggage carrier is attached to the roof of the vehicle 7, or when a spare tire is attached to the rear surface of the vehicle 7, the cleaning process is performed using the vehicle cleaning rotating brush 510 based on the most efficient operation data on the vehicle cleaning robot arm 520. The operation data is previously stored in the main control device of the automatic vehicle washing apparatus 102.

The vehicle cleaning rotating brush 510 shown in Fig. 4(a) is provided with three roll-shaped rotating brushes. However, the vehicle cleaning rotating brush 510 may be provided with one to five roll-shaped rotating brushes.

If the diameter of the rotating brush is large and the rotating speed is high, the end of the rotating brush hits the surface of the vehicle along with sand particles attached to the surface of the vehicle. Consequently, fine scratches are likely to occur.

If the diameter of the vehicle cleaning rotating brush is small and the material of the brush is stiff, when the rotating brush rotates, the end of the brush hits the body of the vehicle intensely. Consequently, scratches are likely to occur. The distance between a metallic or plastic attaching part, to which the vehicle cleaning rotating brush 510 is attached, and the surface of the vehicle, is small. Therefore, accuracy of the control function of the vehicle cleaning robot arm 520 is required.

It is desirable that the relative speed of the rotating speed of the vehicle cleaning brush 510 and the movement speed of the vehicle cleaning robot arm 520 to the surface of the vehicle is minimum in order to clean the surface of the vehicle. As long as the required speed is attained, it is preferable that the rotating speed of the vehicle cleaning rotating brush 510 is slower in order to prevent scratches on the surface of the vehicle and cleaning solution from scattering. It is necessary that the material of the brush is unlikely to damage the paintwork of the vehicle easily and is durable.

If the diameter of the rotating brush is large and five or more rotating brushes are aligned, the entire area of the vehicle cleaning rotating brush 510 becomes so large that it is inadequate for vehicle washing.

If the diameter of the rotating brush is large, the distance from the rotating shaft to the end of the rotating brush is long. Therefore, even if a protection cover is attached to the vehicle cleaning robot arm 520, there is an advantage that the edge or the corner of the protection cover of the vehicle cleaning rotating brush is unlikely to contact.

In view of operational errors of the vehicle cleaning robot arm 520, the diameter size of the rotating brush, the number of the rotating brush provided to the vehicle cleaning rotating brush 510, the material of the rotating brush that does not damage the surface of the vehicle and is durable, and the rotating speed of the vehicle cleaning rotating brush 510, are considered and determined. The rotational speed of the vehicle cleaning rotating brush 510 may vary according to whether a large surface is cleaned, or a small area where components are incorporated is cleaned.

Fig. 4(b) is an explanatory view of a cleaning method of the tire and the wheel. When the vehicle 7 stops at the specified vehicle stop position 179 for cleaning in the robot arm automatic vehicle cleaning device 220, the actual position at which the vehicle 7 stops is detected. The tire position is calculated based on the vehicle's actual size data measured by the vehicle actual size measuring device 210 based on the stop position of one of the tires. Tire cleaning rotating brushes 570 provided on the wall surfaces on both sides of the robot arm automatic vehicle cleaning device 220 horizontally move to the tire positions. The rotating shaft of the tire cleaning rotating brush 570 extends so that the rotating shaft is pressed against the tire and the wheel with an adequate pressure. While cleaning solution is delivered, the tire cleaning rotating brush 570 rotates in both directions. Thus, the cleaning process is performed.

The material of the tire cleaning rotating brush 570 may be stiffer and stronger than the material of the vehicle cleaning rotating brush 510. However, the tire cleaning rotating brush 570 is basically similar to the vehicle cleaning rotating brush 510.

As described above, in S333, the cleaning process of the surface of the vehicle, and the tire or the wheel is finished. In S335, the vehicle sop, which is shut ahead of the vehicle cleaning stop position 179 in the robot arm automatic vehicle cleaning device 220, is released. In S337, a driver starts the engine to move the vehicle 7 forward to the exit (C).

In order to perform the rinsing process of the vehicle 7, which is in a state in which dirt is dissolved by detergent, in S339, the vehicle 7 stops at a specified position of a rinsing shower curtain device 230 and the engine is stopped.

In S340, the rinsing process of the front surface, both of the lateral surfaces, the rear surface, and the upper surface of the vehicle 7 is performed with jet flow of rinsing solution. The rinsing solution is ejected from the spray nozzles provided to both of the lateral surfaces and the upper surface of the rinsing shower curtain device.

As shown in Fig. 5(a), the rinsing process of the bottom surface of the vehicle is performed with rinsing solution ejected from the spray nozzle. The spray nozzle is used for the rinsing process of the bottom surface of the vehicle, and is similar to the vehicle bottom surface cleaning spray nozzle installed at the vehicle stop position 179 for cleaning in the robot arm automatic vehicle cleaning device 220 described above.

The rinsing process of the bottom surface of the vehicle is automatically performed in accordance with the vehicle cleaning method selected by the driver at the entrance (A) of the robot arm automatic vehicle washing station. The driver selects whether the ejection amount of rinsing solution is large or small, or the time of the rinsing process is long or short.

Fig. 5(b) shows a state in which the rinsing process of the bottom surface and the underbody of the vehicle 7 is performed. When detergent is used to clean the peripheries of the suspension and the brake of the vehicle, it is necessary to perform the rinsing process thoroughly so that detergent does not remain.

In S610, the rinsing process of the bottom surface of the vehicle is performed using rinsing solution. Rinsing solution is ejected at a high pressure from the plurality of spray nozzles. The plurality of spray nozzles are provided to the surface of the specified vehicle stop position for rinsing in the rinsing shower curtain device 230.

The rinsing process of the peripheries of the tire and the wheel on the side of the lateral surface of the vehicle 7, and the periphery of the brake is performed using rinsing solution, which is ejected at a high pressure from rinsing spray nozzles 620. The rinsing spray nozzles 620 are located at the height of the tire and several dozen centimeters away from the lateral surface of the vehicle.

In S343, after the sufficient rinsing process of the overall periphery of the vehicle is finished, operation of the rinsing shower curtain device 230 is stopped.

In S350, notification is outputted through a message board or the speaker. The vehicle stop, which is shut in front of the vehicle, is released. The engine is started again to move the vehicle forward to an air jet wiping device 240 for the wiping process.

It is preferable that the rinsing process is continued until the tire and the wheel start rotating slowly and the vehicle 7 gets out of the rinsing shower curtain device 230. The rinsing process is performed using rinsing solution ejected from the spray nozzle 620, which is located at the height of the tire on the side of the lateral side of the vehicle.

In S351, after the cleaning process and the rinsing process of the vehicle 7 are finished, the vehicle 7 slowly passes under the air jet wiping device 240 at low speed so that the wiping process of the overall periphery of the vehicle is performed as a final process.

The air jet wiping device 240, under which the vehicle 7 passes, is tunnel shaped. The wiping process of the vehicle is performed with compressed air. Compressed air is ejected with great force from a plurality of compressed air spray nozzles. The compressed air spray nozzles are provided on both wall surfaces and the ceiling inside the air jet wiping device 240.

If the vehicle 7 moves forward too fast, the vehicle 7 is not sufficiently wiped out. Therefore, the wiping process is gradually performed from the front side of the vehicle to the rear side of the vehicle, while the vehicle 7 moves forward as slowly as possible.

The wiping process is finished where the vehicle 7 passes through the air jet wiping device 240. The vehicle passes through the exit (C) of the robot arm automatic vehicle washing station shown in Fig. 2(c), and the entire vehicle washing processes are finished.

Fig. 6 is an explanatory view showing a robot arm automatic vehicle washing station centralized management system that can remotely perform operational management such as fault management and functional testing by connecting a main control device of the automatic vehicle washing apparatus 102, which is installed in each robot arm automatic vehicle washing station in order to control the robot arm automatic vehicle washing apparatus, to a robot arm automatic vehicle washing station maintenance center 601 via a communication line.

The entire processes are centrally controlled by the main control device of the automatic vehicle washing apparatus 102.

That is, the process by the vehicle washing method selecting and fee payment device 201 that is provided at the entrance of the robot arm automatic vehicle washing station is controlled. The process by the vehicle's actual size measuring device 210 that takes pictures of the front surface, both of the lateral surfaces, the rear surface, and the upper surface of the vehicle to create vehicle image data is controlled. The vehicle cleaning process by the robot arm automatic vehicle cleaning device 220 that automatically cleans the vehicle in accordance with the shape of the vehicle based on the actual size data of the vehicle measured by the vehicle's actual size measuring device 210, is controlled. The vehicle rinsing process by the rinsing shower curtain device 230 that detects the vehicle approaches the specified vehicle stop position and starts the rinsing process, is controlled. The process, in which the vehicle stop is released after each process is over, is controlled. And, the wiping process by the air jet wiping operation device 240 that detects that the vehicle approaches the air jet wiping device and starts the wiping process, is controlled.

As shown in Fig. 6 which illustrates areas (A), (B), (C), (D), and (E), each of the main control devices of the automatic vehicle washing apparatuses 102 installed at the robot arm automatic vehicle washing stations in the urban area or the suburb, is connected to the maintenance center 601 of the robot-arm automatic vehicle washing station through the communication line. If failure or error of the robot arm automatic vehicle washing apparatus occurs, cause can be clarified by the remote diagnosis operation and troubleshooting can be provided immediately.

It is preferable that self-diagnosis function is provided to the automatic vehicle washing apparatus. The self-diagnosis function performs a functional diagnosis process with respect to each of the operating parts of the devices in the apparatus, when the robot arm automatic vehicle washing apparatus is not operating and is available.

The invention is not restricted to the embodiment as described above, and may be practiced or embodied in still other ways without departing from the subject matter thereof.

For example, the silhouette method may be used so that the vehicle image data created by taking pictures of each surface of the vehicle 7 is analyzed as three dimensional data to obtain the vehicle's actual size data. However, as long as the vehicle's actual size data is obtained, other measuring method such as the method using laser may be adopted.

Also, the surface of the vehicle may be cleaned using the vehicle cleaning brush provided to the end of the robot arm in the same way that the surface of the vehicle reproduced as a three-dimensional model based on the vehicle image data is gradually wiped on a computer.

The vehicle's actual size measuring device 210 for measuring the vehicle's actual size and the robot arm automatic vehicle cleaning apparatus 220 may operate simultaneously at the same position as shown in Fig. 1. Alternatively, the vehicle's actual size measuring device 210 and the robot arm automatic vehicle cleaning apparatus 220 may operate separately at different positions.

The vehicle cleaning robot arms 520 shown in Fig. 4(a) may be disposed on the floor on both sides of the vehicle as the vehicle's left side cleaning robot arm 110 and the vehicle's right side cleaning robot arm 120 as shown in Fig. 1. Alternatively, the vehicle cleaning robot arms 520 may be disposed on a wall or a ceiling of an installation space.

In the present embodiment, the vehicle cleaning robot arm includes the vehicle's left side cleaning robot arm 110 and the vehicle's right side cleaning robot arm 120. The vehicle's left side cleaning robot arm 110 mainly cleans the left side of the vehicle. The vehicle's right side cleaning robot arm 120 mainly cleans the right side of the vehicle. However, a single vehicle cleaning robot arm may perform the cleaning process of the overall periphery of the vehicle.

Also, the overall periphery of the vehicle may be divided into several sections, such as the right lateral surface, the left lateral surface, the upper surface, and the like. Each of the vehicle cleaning robot arms provided to each section may clean a corresponding area.

The present method for performing the cleaning process using the robot arm automatic vehicle washing apparatus with the robot arm can be applied not only to a vehicle, but also to a train or an airplane.

The tire cleaning rotating brush 570 may be located at the position where the robot arm automatic vehicle cleaning apparatus 220 is installed as shown in Fig. 2. Although not shown, the tire cleaning rotating brush 570 may be installed at a specified position only for cleaning the tire.

The cleaning process of the tire may be performed using the tire cleaning rotating brush 570 whose rotating shaft extends from each of the wall surfaces of the vehicle stop position as shown in Fig. 4(b). Alternatively, the tire cleaning rotating brush 570 may be located on each side of the floor of the specified vehicle stop position in the robot arm automatic vehicle cleaning device 220 shown in Fig. 2.

In the above description, the vehicle washing fee is paid when the washing method is selected using the vehicle washing method selecting and fee payment device 201 disposed at the entrance (A) of the robot arm automatic vehicle washing station.

However, the vehicle washing fee may be paid in a following manner. Specifically, a camera may be provided at every position where the vehicle stops for the processes. Every time the vehicle passes the position, a license plate of the vehicle may be read. While it is checked whether the license plate is the same as the license plate of the vehicle that has selected the washing method at the entrance, each process may be performed. Thus, the vehicle may be identified by the license plate, and the washing fee at the robot arm automatic vehicle washing station may be paid from a budget account which is specified for the payment of the washing fee.

In the future, when a system will operate to record all the routes the vehicle has taken, such as when and where the vehicle has traveled, which robot arm automatic vehicle washing station and washing program is selected can be identified. Thus, by using the system to record all the routes the vehicle has taken, the washing fee will be able to be paid from a budget account specified by an owner of the vehicle.

Unlike the conventional vehicle washing station, the robot arm automatic vehicle washing station does not require space for several vehicles to be manually washed and wiped in addition to the space for the automatic vehicle cleaning device. Only space for a set of installations of the entrance, the cleaning process, the rinsing process, the wiping process, and the exit is necessary. While the leading vehicle is in the rinsing process, the second vehicle starts the cleaning process. Thus, the processes are sequentially performed in an assembly line system.

The space of the automatic vehicle washing station may be approximately the same as the space of a conventional gas station. It is preferable that as in the gas station, the automatic vehicle washing station has a roof to protect an operational machine such as the vehicle cleaning robot arm.

Industrial Applicability

The number of household vehicles is increased, and a single household often owns two or three vehicles. Maintenance of the vehicle is a troublesome task. Carefully washing the vehicle especially requires extra time and effort, while this task needs to be performed frequently.

According to the present robot arm automatic vehicle washing apparatus and the robot arm vehicle washing method, if a vehicle is washed at the robot arm automatic vehicle washing station along a street, it is not necessary for a driver to get out of the vehicle. While the driver is in the vehicle, the vehicle is washed in a drive-through style. Vehicle washing can be performed at the robot arm vehicle washing station as though fueling is performed at a gas station.

Owning the vehicle requires vehicle maintenance, for example, vehicle inspections, regular checks, insurance, tax payments, parking payments, component replacements, oil changes, fueling, vehicle washing, and the like. Such troublesome maintenance should be gotten rid of.

According to the present invention, a burden of vehicle washing can be reduced. Furthermore, the mobility can be substantially maintained by cleaning the bottom surface and the underbody as the moving parts of the vehicle.

If the suspension parts or the periphery of the brake, in which some parts are incorporated, get soiled from greasy dirt or scratch dust, the braking ability is unsafely reduced.

However, it seems that most of the busy individuals barely find time to perform vehicle washing and maintenance of the outer paint surface of the vehicle using wax or the like. Some individuals may pay for vehicle washing at a vehicle dealer, a vehicle shop, or a gas station, or may manually wash their vehicles at their garages. Since the suspension and the brake are located on the bottom surface of the vehicle and inside of the tire, it is difficult to clean the peripheries of the suspension and the brake with hands.

In the present invention, although it costs more or less, effort and time can be saved. Furthermore, there is no need to perform vehicle washing outside in the cold winter. Thus, sufficient needs are expected.

Recently, there are many gas stations, which compete against each other, in town, and the number of self-service gas stations is increased.

Vehicle washing can be performed at a place with a roof whose size is approximately the same as the size of a gas station. Vehicle washing can be performed as easily as fueling at a gas station. Thus, the mobility of the moving parts of the vehicle can be substantially maintained. Furthermore, since the vehicle is maintained clean and a driver can comfortably drive a vehicle, safety can be enhanced.

The robot arm with sufficient function and performance has been already used at various industrial assembly factories. If the robot arm is durable for outside use, the robot arm can be used for vehicle washing.

The development competition and the demand of a new practical robot arm for vehicle washing are expected. This leads to the revitalization of the industry, and makes living more comfortable and affluent.

## Claims

1. A robot arm automatic vehicle cleaning device that automatically performs a vehicle cleaning process using a cleaning brush provided to an end of a robot arm in accordance with a shape of a vehicle.

2. A robot arm automatic vehicle washing apparatus that detects a vehicle which stops at a specified vehicle stop position and automatically performs a vehicle cleaning process using a cleaning brush provided to an end of a robot arm in accordance with actual size data of a vehicle as input data,
wherein the actual size data of the vehicle is quantified as an actual size of the vehicle by analyzing vehicle image data which is created by taking pictures of a front surface, a left lateral surface, a right lateral surface, a rear surface, and an upper surface of the vehicle with a camera.

3. A vehicle cleaning rotating brush wherein a vehicle cleaning process is performed using a roll shaped rotating brush attached to an end of a robot arm of a robot arm automatic vehicle cleaning device.

4. The vehicle cleaning rotating brush according to claim 3, wherein vehicle cleaning is performed using the roll shaped rotating brush attached to the end of the robot arm of the robot arm automatic vehicle cleaning device, and
wherein the vehicle cleaning rotating brush includes several rotating brushes, each of the several rotating brushes alternately rotating in an opposing direction.

5. The vehicle cleaning rotating brush according to claim 3, wherein a comb shaped rotating brush cleaning device is fixedly attached to an attachment metal part for attaching the roll shaped rotating brush for cleaning the surface of the vehicle provided to the end of the robot arm of the robot arm automatic vehicle cleaning device, so that the rotating brush is cleaned every time the rotating brush rotates, and
wherein the rotating brush cleaning device has width equal to width of the rotating brush and length long enough to reach the rotating shaft.

6. A tire cleaning rotating brush that is disc shaped and is provided to an expandable/contractible rotating shaft,
wherein after the rotating shaft moves to a tire position, the rotating shaft provided with the tire cleaning brush extends so that the tire cleaning rotating brush is pressed against a tire and a wheel with adequate pressure, and
wherein the tire cleaning rotating brush rotates in both directions so as to clean the tire and the wheel.

7. The tire cleaning rotating brush according to claim 6, wherein the actual size of the vehicle is quantified by analyzing vehicle image data which is created by taking pictures of a front surface, a left lateral surface, a right lateral surface, a rear surface, and an upper surface of the vehicle,
wherein the tire position where the vehicle stops is detected in accordance with the measured actual size data of the vehicle,
wherein the rotating shaft automatically moves to the tire position of the vehicle,
wherein the rotating shaft provided with the tire cleaning brush extends so that the tire cleaning brush is pressed against the tire, and
wherein the tire cleaning rotating brush rotates in both directions so as to clean the tire and the wheel.

8. A vehicle bottom surface automatic cleaning device, wherein cleaning solution is ejected from a plurality of spray nozzles provided to whole area of a specified vehicle stop position where a vehicle stops, and
wherein bottom surfaces and peripheries of a suspension and a brake of the vehicle are cleaned by cleaning force to dissolve dirt and by impact force when cleaning solution hits area to be cleaned.

9. A vehicle bottom surface automatic cleaning device,
wherein rinsing solution is ejected from a plurality of spray nozzles provided to whole area of a specified vehicle stop position where a vehicle stops, and
wherein bottom surfaces and peripheries of a suspension and a brake of the vehicle are cleaned by cleaning force of detergent to dissolve dirt and by impact force when cleaning solution hits area to be cleaned intensely.

10. A vehicle underbody automatic cleaning device,
wherein cleaning solution is ejected from a plurality of spray nozzles,
wherein the plurality of spray nozzles are provided on both sides of the specified vehicle stop position where a vehicle stops, at the same height as tire positions, and to positions several dozen centimeters away from tires, and
wherein peripheries of a tire, a wheel, and a brake, as an underbody of the vehicle, are cleaned from outside of the vehicle by impact force when cleaning solution hits area to be cleaned and by cleaning force to dissolve dirt.

11. A vehicle underbody automatic cleaning device,
wherein rinsing solution is ejected from a plurality of spray nozzles,
wherein the plurality of spray nozzles are provided on both sides of a specified vehicle stop position where a vehicle stops, at the same height as tire positions, and to positions several dozen centimeters away from tires, and
wherein peripheries of a tire, a wheel, and a brake, as an underbody of the vehicle, are cleaned from outside of the vehicle by impact force, when rinsing solution hits area to be rinsed, and by cleaning force of rinsing solution.

12. A vehicle underbody automatic cleaning device,
wherein several hoses or delivery pipes are tied into a bundle,
wherein the hoses or delivery pipes are used to deliver one of cleaning solution and rinsing solution,
wherein a spray nozzle is attached to an end of each of the hoses or delivery pipes,
wherein a position at which a vehicle actually stops in a specified vehicle stop position is detected,
wherein a tire stop position is calculated based on vehicle actual size data, and
wherein one of cleaning solution and rinsing solution is ejected from the spray nozzle to a tire and a wheel as an underbody of the vehicle, and a periphery of a disc brake so as to intensively perform one of a cleaning process and a rinsing process.

13. A vehicle rinsing shower curtain device that is one of arch and tunnel shaped and is provided with a plurality of rinsing solution spray nozzles that are inwardly arranged,
wherein rinsing solution is ejected from a rinsing solution spray nozzle, so that dirt attached to a vehicle, dirt dissolved after a cleaning process, and detergent, is rinsed by impact force when cleaning solution hits the vehicle and by cleaning force of rinsing solution.

14. An air jet wiping device that is one of arch and tunnel shaped,
wherein pressurized air is ejected from a plurality of pressurized air spray nozzles provided to whole internal area so as to wipe a vehicle that passes inside of the air jet wiping device at a low speed.

15. A robot arm automatic vehicle washing device centralized control system,
wherein a main control device of a robot arm automatic vehicle washing apparatus, as one of devices within each of robot arm automatic vehicle washing devices which are dotted in places, is connected to a maintenance center of the robot arm automatic vehicle washing apparatus via a communication line, so that a fault management, a functional testing, and an operational management of the robot arm automatic vehicle washing apparatus can be centrally performed.
